# EUROPEAN PATENT APPLICATION

(11) **EP 2 996 379 A1**
(43) Date of publication of application: **16.03.2016**
(21) Application number: 14795102.4
(22) Date of filing: 25.03.2014
(51) Int. Cl.: H04W 24/00

(54) **METHOD, SYSTEM AND DEVICE FOR ACQUIRING QUALITY OF SERVICE OF WIRELESS ACCESS POINT**

(30) Priority: 10.05.2013 CN 201310172792
(71) Applicant: ZTE Corporation, Shenzhen, Guangdong 518057 (CN)
(72) Inventor: CUI, Yunpeng, Shenzhen Guangdong 518057 (CN); DAI, Qian, Shenzhen Guangdong 518057 (CN); YAO, Jun, Shenzhen Guangdong 518057 (CN); LU, Ting, Shenzhen Guangdong 518057 (CN)
(74) Representative: Tischner, Oliver
(86) International application number: PCT/CN2014/074053
(87) International publication number: WO 2014/180191

(57) **Abstract**

A method, system and device for acquiring the quality of service of a wireless Access Point (AP) are described, wherein the method includes that: a User Equipment (UE) detects quality of service of an AP according to a detection indication sent from a network side device; and the UE reports a detection result of the quality of service of the AP to the network side device.

## Description

### TECHNICAL FIELD

The disclosure relates to the field of mobile communications, particularly to a method, system and device for acquiring quality of service of a wireless Access Point (AP).

### BACKGROUND

At present, a User Equipment (UE) not only supports the Fourth Generation (4G) wireless communications technology, but also supports the Wireless Local Area Network (WLAN) technology based on Institute of Electrical and Electronics Engineers (IEEE) 802.11. There are many UEs having the dual-mode feature above, such as a smart phone, a tablet computer and so on. With the popularity of WLANs, a WLAN has been applied as a hotspot coverage technology in a communications network, and a device of the WLAN are installed more and more in personal homes and business places, such as cafes, restaurant and so on, wherein a control mechanism of the WLAN is mainly completed by a UE while a control mechanism of a Long Term Evolution (LTE) network is mainly completed by a network device. An operator expects to control allocation of network resources of the WLAN more initiatively to improve use efficiency of the resources when constructing the WLAN. However, a base station in a mobile network can hardly learn current quality of service of an AP in the WLAN within the coverage of the base station dynamically. Therefore, the LTE network can hardly improve adaptability and the use efficiency of the resources when making decisions including resource allocation and so on.

### SUMMARY

In view of this, embodiments of the disclosure provide a method, system and device for acquiring quality of service of an AP so as to improve adaptability when an LTE network allocates resources, and improve resource utilization of the LTE network and a WLAN.

A method for acquiring quality of service of an AP is provided by an embodiment of the disclosure. The method includes that:
detecting, by a User Equipment (UE), quality of service of an AP according to a detection indication sent from a network side device;
reporting, by the UE, a detection result of the quality of service of the AP to the network side device.

In the solution above, the quality of service of the AP may include: signal quality of the AP, and/or a current load of the AP,
wherein the signal quality of the AP may include a measured value of the signal quality of the AP, or an access characteristic value of the AP.

In the solution above, the detection indication may include one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

In the solution above, a content of the detection result of the quality of service reported by the UE may include one of the followings or a combination thereof:
related information of an AP with a detection result satisfying a preset condition is reported;
related information of an AP detected unsuccessfully is reported; and
related information of an AP with a detection result not satisfying the preset condition is reported.

In the solution above, the preset condition may include one of the followings or a combination thereof:
signal quality of a detected AP is higher than a preset threshold;
signal quality of a detected AP is lower than the preset threshold;
a load of a detected AP is higher than a preset threshold; and
a load of a detected AP is lower than the preset threshold.

In the solution above, the reporting the detection result of the quality of service of the AP to the network side device may include:
reporting, by the UE, the detection result of the quality of service of the AP to the network side device by using a Radio Resource Control (RRC) signaling;
or reporting, by the UE, the detection result of the quality of service of the AP to the network side device by using a Medium/Media Access Control Element (MAC CE).

An embodiment of the disclosure further provides a method for acquiring quality of service of an Access Point (AP), which includes:
delivering, by a network side device, a detection indication to a User Equipment (UE);
adjusting and regulating, by the network side device, resource allocation according to a detection result of quality of service of an AP reported by the UE.

In the solution above, the detection indication may include one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

In the solution above, the detection result of the quality of service of the AP may include: a measuring result of signal quality, and/or information of a current load of the AP;
wherein the measuring result of the signal quality of the AP may include a measured value of the signal quality of the AP, or an access characteristic value of the AP.

In the solution above, a content of the detection result of the quality of service may include one of the followings or a combination thereof:
related information of an AP with a detection result satisfying a preset condition is reported;
related information of an AP detected unsuccessfully is reported; and
related information of an AP with a detection result not satisfying the preset condition is reported.

In the solution above, the preset condition may include one of the followings:
signal quality of a detected AP is higher than a preset threshold;
signal quality of a detected AP is lower than the preset threshold;
a load of a detected AP is higher than a preset threshold; and
a load of a detected AP is lower than the preset threshold.

In the solution above, the delivering the detection indication to the UE may include:
sending, by the network side device, the detection indication to the UE by using a Radio Resource Control (RRC) signaling;
or sending, by the network side device, the detection indication to the UE by using a Medium/Media Access Control Element (MAC CE);
or sending, by the network side device, the detection indication to the UE by using a system message.

An embodiment of the disclosure further provides a method for acquiring quality of service of an Access Point (AP), which includes:
delivering, by a network side device, a detection indication to a User Equipment (UE);
detecting, by the UE, quality of service of an AP according to the detection indication sent from the network side device;
reporting, by the UE, a detection result of the quality of service of the AP to the network side device;
adjusting and controlling, by the network side device, resource allocation according to the detection result of the quality of service of the AP reported by the UE.

An embodiment of the disclosure further provides a User Equipment (UE), which includes:
the detection module is configured to detect quality of service of an Access Point (AP) according to a detection indication sent from a network side device, and send a detection result of the quality of service of the AP to the transceiver module;
the transceiver module is configured to report the detection result of the quality of service of the AP sent from the detection module to the network side device.

In the solution above, the detection module may be configured to detect signal quality of the AP, and/or a current load of the AP as the quality of service of the AP.
wherein the signal quality of the AP may include a measured value of the signal quality of the AP, or an access characteristic value of the AP.

In the solution above, the detection indication may include one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

In the solution above, the detection module may be configured to report a content of the detection result of the quality of service, including one of the followings or a combination thereof:
report related information of an AP with a detection result satisfying a preset condition;
report related information of an AP detected unsuccessfully; and
report related information of an AP with a detection result not satisfying the preset condition.

In the solution above, the detection module may be configured to use one of the followings or a combination thereof as the preset condition:
signal quality of a detected AP is higher than a preset threshold;
signal quality of a detected AP is lower than the preset threshold;
a load of a detected AP is higher than a preset threshold; and
a load of a detected AP is lower than the preset threshold.

In the solution above, the transceiver module may be configured to report a detection result of the quality of service of each AP to the network side device by using a Radio Resource Control (RRC) signaling;
or report a detection result of the quality of service of each AP to the network side device by using a Medium/Media Access Control Element (MAC CE).

An embodiment of the disclosure further provides a network side device, which includes:
the transceiver module is configured to deliver a detection indication to a User Equipment (UE), and send a detection result of quality of service of an Access Point (AP) reported by the UE to the control module;
the control module is configured to adjust and control resource allocation according to the detection result of the quality of service of the AP which is sent from the transceiver module and reported by the UE.

In the solution above, the detection indication may include one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

In the solution above, the transceiver module may be configured to receive a measuring result of signal quality of the AP reported by the UE, and/or information of a current load of the AP as the detection result of the quality of service,
wherein the measuring result of the signal quality of the AP may include a measured value of the signal quality, or an access characteristic value of the AP.

In the solution above, a content of the detection result of the quality of service may include one of the followings or a combination thereof:
related information of an AP with a detection result satisfying a preset condition is reported;
related information of an AP detected unsuccessfully is reported; and
related information of an AP with a detection result not satisfying the preset condition is reported.

In the solution above, the preset condition may include one of the followings or a combination thereof:
signal quality of a detected AP is higher than a preset threshold;
signal quality of a detected AP is lower than the preset threshold;
a load of a detected AP is higher than a preset threshold; and
a load of a detected AP is lower than the preset threshold.

In the solution above, the transceiver module may be configured to send the detection indication to the UE by using a Radio Resource Control (RRC) signaling;
or send the detection indication to the UE by using a Medium/Media Access Control Element (MAC CE);
or send the detection indication to the UE by using a system message.

An embodiment of the disclosure further provides a system for acquiring quality of service of an Access Point (AP), which includes: a network side device and a User Equipment (UE), wherein
the network side device is configured to deliver a detection indication to the UE and adjust and control resource allocation according to a detection result of quality of service of an AP reported by the UE;
the UE is configured to detect the quality of service of the AP according to the detection indication sent from the network side device, and report the detection result of the quality of service of the AP to the network side device.

In a method, system and device for acquiring the quality of service of an AP according to the embodiments of the disclosure, a UE detects the quality of service of each current AP according to a detection indication sent from a network side device; and the UE reports a detection result of the quality of service of each current AP to the network side device. In this way, an LTE network can acquire the quality of a current AP, thus improving adaptability to a current network condition when allocating a resource while improving the use ratio of resources of the LTE network and a WLAN.

### BRIEF DESCRIPTION OF THE DRAWINGS

Fig. 1 is a flowchart of a method for acquiring quality of service of an AP on a UE side according to an embodiment of the disclosure;
Fig. 2 is a flowchart of a method for acquiring quality of service of an AP for a network side device according to an embodiment of the disclosure;
Fig. 3 is a structural diagram of components of a system for acquiring quality of service of an AP according to an embodiment of the disclosure;
Fig. 4 is a flowchart of the first embodiment of the disclosure;
Fig. 5 is a flowchart of the second embodiment of the disclosure;
Fig. 6 is a flowchart of the third embodiment of the disclosure; and
Fig. 7 is a flowchart of the fourth embodiment of the disclosure.

### DETAILED DESCRIPTION

The basic idea of embodiments of the disclosure is that: a UE detects quality of service of an AP according to a detection indication sent from a network side device, and the UE reports a detection result of the quality of service of the AP to the network side device.

The disclosure will be further expounded hereinafter with reference to the accompanying drawings and specific embodiments.

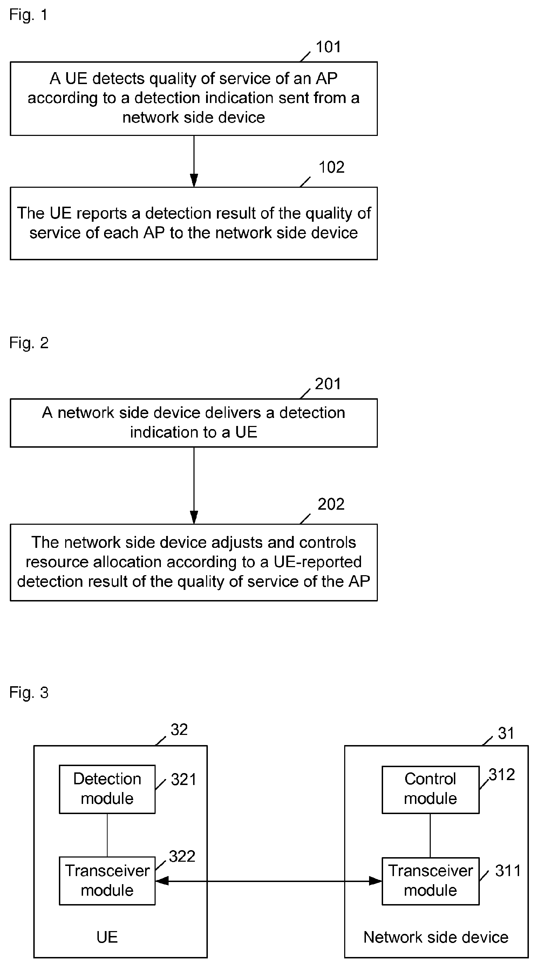

Fig. 1 shows a flowchart of a method for acquiring quality of service of an AP on a UE side according to an embodiment of the disclosure, including following steps:
Step 101: A UE detects quality of service of an AP according to a detection indication sent from a network side device.

Here, the quality of service includes: signal quality of the AP, and/or a current load of the AP;
wherein the signal quality of the AP includes a measured value of the signal quality of the AP, or an access characteristic value of the AP.
the access characteristic value of the AP includes: accessible, inaccessible or detected unsuccessfully.
the detection indication includes one of the followings or a combination thereof: whether the UE is required to report a detection result of the quality of service of the AP; a specific content detected by the UE is indicated; a detection frequency or a detection period of the UE and/or a reporting frequency or a reporting period of the detection result of the quality of service are/is indicated; the UE is indicated to report some or all contents in the detection result of the quality of service; the UE is indicated to report configuration information acquired from an ANDSF.

A content of the UE-reported detection result of the quality of service includes one of the followings or a combination thereof: related information of an AP with a detection result satisfying a preset condition is reported; related information of an AP detected unsuccessfully is reported; and related information of an AP with a detection result not satisfying the preset condition is reported,
wherein the preset condition includes one of the followings or a combination thereof: signal quality of a detected AP is higher than a preset threshold; signal quality of a detected AP is lower than the preset threshold; a load of a detected AP is higher than a preset threshold; and a load of a detected AP is lower than the preset threshold.

Step 102: The UE reports a detection result of the quality of service of each AP to a base station.

Here, the detection result of the quality of service of the AP includes: a measuring result of the signal quality of the AP, and/or information of the current load of the AP;
wherein the measuring result of the signal quality of the AP includes: the signal quality measured value, or the access characteristic value of the AP; and the access characteristic value of the AP is: accessible, inaccessible or detected unsuccessfully.

The operation that the detection result of the quality of service of each AP is reported to the base station may include that the UE reports the detection result of the quality of service of each AP to the base station in a 3^{rd} Generation Partnership Project (3GPP) network by using an RRC signaling. For example, a cell may be added in an existing RRC signaling or a new RRC message may be defined;
or the UE reports the detection result of the quality of service of each AP to the base station in a 3GPP network by using an MAC CE.

Fig. 2 shows a flowchart of a method for acquiring quality of service of an AP for a network side device according to an embodiment of the disclosure, including:
Step 201: A network side device delivers a detection indication to a UE.

Here, the detection indication includes one of the followings or a combination thereof: whether the UE is required to report a detection result of the quality of service of the AP; a specific content detected by the UE is indicated; a detection frequency or a detection period of the UE and/or a reporting frequency or a reporting period of the detection result of the quality of service are/is indicated; the UE is indicated to report some or all contents in the detection result of the quality of service, the UE is indicated to report configuration information acquired from an ANDSF,
wherein a content of the detection result of the quality of service includes one of the followings or a combination thereof: related information of an AP with a detection result satisfying a preset condition is reported; related information of an AP detected unsuccessfully is reported; and related information of an AP with a detection result not satisfying the preset condition is reported.

The preset condition includes one of the followings: signal quality of a detected AP is higher than a preset threshold; signal quality of a detected AP is lower than the preset threshold; a load of a detected AP is higher than a preset threshold; and a load of a detected AP is lower than the preset threshold.

The detection result of the quality of service of the AP includes: a measuring result of the signal quality of the AP, and/or information of a current load of the AP.

The measuring result of the signal quality of the AP includes a measured value of the signal quality, or an access characteristic value of the AP, and the access characteristic value of the AP is: accessible, inaccessible or detected unsuccessfully.

Step 202: The network side device adjusts and controls resource allocation according to a UE-reported detection result of the quality of service of the AP.

Specifically, a base station controls the allocation of network resources according to the UE-reported detection result of the quality of service of the AP.

Fig. 3 shows a structural diagram of a system for acquiring quality of service of an AP according to an embodiment of the disclosure, including: a network side device 31 and a UE 32, wherein
the network side device 31 is configured to deliver a detection indication to the UE 32, and adjust and control resource allocation according to a detection result of quality of service of an AP reported by the UE 32;
the UE 32 is configured to detect the quality of service of the AP according to the detection indication sent from the network side device 31, and report the detection result of the quality of service of the AP to the network side device.

The UE 32 includes: a detection module 321 and a transceiver module 322, wherein
the detection module 321 is configured to detect the quality of service of the AP according to the detection indication sent from the network side device, and send the detection result of the quality of service of the AP to the transceiver module 322;
the transceiver module 322 is configured to report the detection result of the quality of service of the AP sent from the detection module 321 to the network side device 31.

The quality of service includes: signal quality of the AP, and/or a current load of the AP, the signal quality of the AP includes a measured value of the signal quality of the AP, or an access characteristic value of the AP, and the access characteristic value of the AP includes: accessible, inaccessible or detected unsuccessfully.

The detection module 321 is configured to detect the signal quality of the AP, and/or the current load of the AP as the quality of service of the AP;
wherein the signal quality of the AP includes a measured value of the signal quality of the AP, or an access characteristic value of the AP,
wherein the detection indication includes one of the followings or a combination thereof: whether the UE is required to report the detection result of the quality of service of the AP; a specific content detected by the UE is indicated; a detection frequency or a detection period of the UE and/or a reporting frequency or a reporting period of the detection result of the quality of service are/is indicated; the UE is indicated to report some or all contents in the detection result of the quality of service; the UE is indicated to report configuration information acquired from an ANDSF.

The detection module 321 is configured to report a content of the detection result of the quality of service, including one of the followings or a combination thereof: report related information of an AP with a detection result satisfying a preset condition; report related information of an AP detected unsuccessfully; and report related information of an AP with a detection result not satisfying the preset condition.

The detection module 321 is configured to use one of the followings or a combination thereof as the preset condition: signal quality of a detected AP is higher than a preset threshold; signal quality of a detected AP is lower than the preset threshold; a load of a detected AP is higher than a preset threshold; and a load of a detected AP is lower than the preset threshold.

The transceiver module 322 is configured to report a detection result of the quality of service of each AP to the network side device by using an RRC signaling; or report a detection result of the quality of service of each AP to the network side device by using an MAC CE.

The detection module 321 may be Digital Signal Processor (DSP) hardware or Central Processing Unit (CPU) hardware in the UE. The transceiver module 322 may be jointly implemented by an antenna and/or DSP hardware, and an antenna and/or CPU hardware.

The network side device 31 includes: a transceiver module 311 and a control module 312, wherein
the transceiver module 311 is configured to deliver the detection indication to the UE, and send the detection result of the quality of service of the AP reported by the UE to the control module 312;
the control module 312 is configured to adjust and control the resource allocation according to the detection result of the quality of service of the AP which is reported by the UE and sent from the transceiver module 311.

The transceiver module 311 is configured to send the detection indication to the UE;
wherein the detection indication includes one of the followings or a combination thereof: whether the UE is required to report the detection result of the quality of service of the AP; a specific content detected by the UE is indicated; a detection frequency or a detection period of the UE and/or a reporting frequency or a reporting period of the detection result of the quality of service are/is indicated; the UE is indicated to report some or all contents in the detection result of the quality of service; the UE is indicated to report configuration information acquired from an ANDSF.

The transceiver module 311 is configured to receive a measuring result of the signal quality of the AP reported by the UE, and/or information of a current load of the AP as the detection result of the quality of service,
wherein the measuring result of the signal quality of the AP includes a measured value of the signal quality of the AP, or an access characteristic value of the AP.

A content of the detection result of the quality of service includes one of the followings or a combination thereof: related information of an AP with a detection result satisfying a preset condition is reported; related information of an AP detected unsuccessfully is reported; and related information of an AP with a detection result not satisfying the preset condition is reported.

The preset condition includes one of the followings or a combination thereof: signal quality of a detected AP is higher than a preset threshold; signal quality of a detected AP is lower than the preset threshold; a load of a detected AP is higher than a preset threshold; and a load of a detected AP is lower than the preset threshold.

The transceiver module 311 is configured to send the detection indication to the UE by using an RRC signaling; or send the detection indication to the UE by using an MAC CE; or send the detection indication to the UE by using a system message.

The transceiver module 311 may be jointed implemented by an antenna and/or DSP hardware, and an antenna and/or CPU hardware in the network side device, and the control module 312 may be implemented by DSP hardware or the CPU hardware in the network side device.

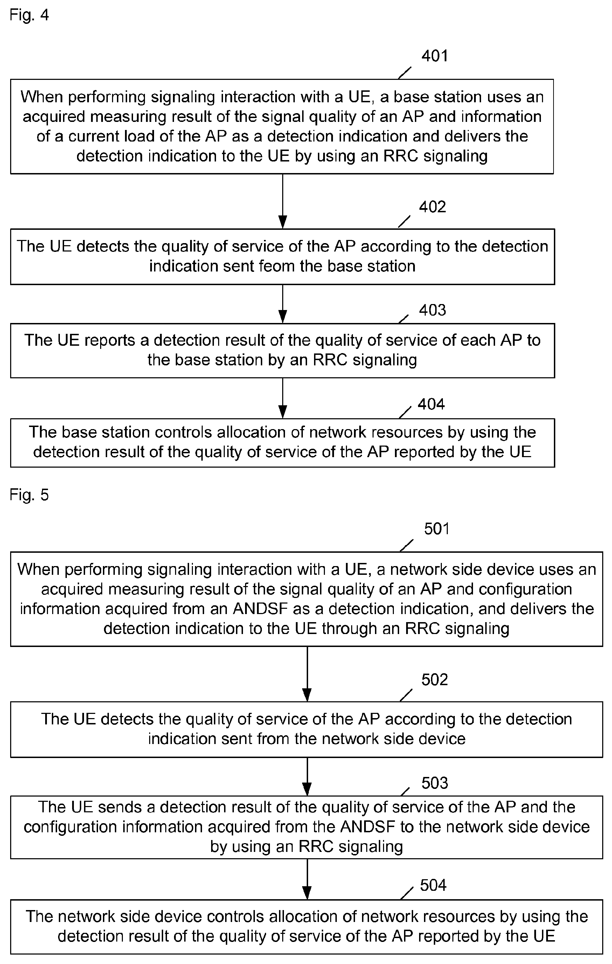

Embodiment 1: A UE sends, by using an RRC signaling, a detected and load information-containing detection result of quality of service of an AP to a base station of an access network, as shown in Fig. 4, including the following steps:

Step 401: When performing signaling interaction with the UE, the base station uses an acquired measuring result of the signal quality of the AP and information of a current load of the AP as a detection indication and delivers the detection indication to the UE by using an RRC signaling.

Here, the interaction between the base station and the UE may be a bearer management process or a mobility management process and so on.

The operation that the detection indication is delivered to the UE includes that: the measuring result of the signal quality of the AP and the information of the current load of the AP are acquired to indicate the UE to report measuring results of all APs, and indicate the UE to use description of an access characteristic value of the AP when acquiring a signal detection result of the AP. The RRC signaling used in the present embodiment is an RRC connection reconfiguration message and is delivered to the UE after a detection indicator element is added.

Step 402: The UE detects the quality of service of the AP according to the detection indication sent from the base station.

Specifically, after receiving the detection indication sent from the base station of a 3GPP access network, the UE detects quality of service of each AP in a linked list of the AP according to the detection indication.

Further, the base station may further configure a timer for the UE, or control, according to location information of a current UE, a signal condition for the UE to detect the AP, so as to reduce power consumption of the UE caused by unnecessary detection. For example, the timer configured by the base station for the UE is 40ms, that is, a duration for the UE to detect the AP is limited within 40ms.

Provided that two APs need to be detected, the UE completes the detection on the two APs within 40ms and generates detection results according to network requirements. The detection results indicate that an access characteristic value corresponding to AP1 is "accessible" and the current load is a light load, and that an access characteristic value corresponding to AP2 is "inaccessible" and the current load is a light load.

Step 403: The UE reports a detection result of the quality of service of each AP to the base station by an RRC signaling.

The UE sends the detection result to the 3GPP access network by using the RRC signaling. In the present embodiment, the UE sends the detection result to the access network by using an uplink RRC signaling during a process of interacting with the access network, and the detection result may be reported by using an information response of the UE.

Step 404: The base station controls allocation of network resources by using the detection result of the quality of service of the AP reported by the UE.

The 3GPP access network controls shunting of the UE or AP access according to the detection result of the quality of service of the AP reported by the UE.

Embodiment 2: A UE sends a detection result of quality of service including no load information to an access network by using an RRC signaling, as shown in Fig. 5, including the following steps:

Step 501: When performing signaling interaction with the UE, a network side device uses an acquired measuring result of the signal quality of an AP and configuration information acquired from an ANDSF as a detection indication, and delivers the detection indication to the UE through an RRC signaling.

Here, the interaction between the base station and the UE may be a bearer management process or a mobility management process and so on, and indicates the UE to detect AP information which only includes a measuring result of the signal quality of the AP to further point out that a signal detection result of the AP is described by an access characteristic value of the AP. The UE is indicated to execute the detection, report a result after the detection, add a detection indicator element to the result, and then send the result to the UE. In the meanwhile, the base station further needs the UE to report whether corresponding information is acquired from the ANDSF.

Step 502: The UE detects the quality of service of the AP according to the detection indication sent from the network side device.

Further, the base station may further configure a timer for the UE, or control, according to location information of a current UE, a signal condition for the UE to detect each AP in a linked list of the AP, so as to reduce power consumption of the UE caused by unnecessary detection. For example, the timer configured by the base station for the UE is 40ms, that is, a duration for the UE to detect each AP is limited within 40ms.

Provided that two APs need to be detected, the UE completes the detection on the two APs within 40ms and generates detection results according to network requirements. The detection results indicate that an access characteristic value corresponding to AP1 is "accessible", and that an access characteristic value corresponding to AP2 is "inaccessible".

In the present embodiment, the UE acquires the configuration information from the ANDSF, thus it is necessary to report the information to the base station.

Step 503: The UE sends a detection result of the quality of service of the AP and the configuration information acquired from the ANDSF to the network side device by using an RRC signaling.

In the present embodiment, the UE sends the detection result to the access network by using an uplink RRC signaling during a process of interacting with the access network. An information response message of the UE may be used to report the detection result and notify the UE of the configuration information acquired from the ANDSF in the previous process.

Step 504: The network side device controls allocation of network resources by using the detection result of the quality of service of the AP reported by the UE.

The 3GPP access network controls shunting of the UE or AP access according to the detection information of the AP reported by the UE.

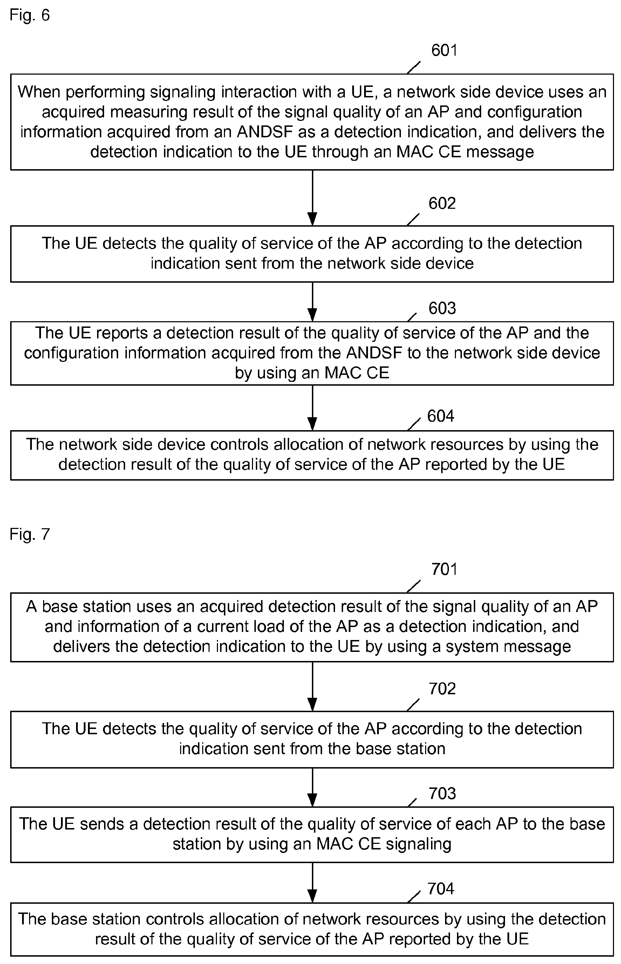

Embodiment 3: A UE sends a load information-containing detection result of quality of service to an access network by using an MAC CE signaling, as shown in Fig. 6, including the following steps:

Step 601: When performing signaling interaction with the UE, a network side device uses an acquired measuring result of the signal quality of an AP and configuration information acquired from an ANDSF as a detection indication, and delivers the detection indication to the UE through an MAC CE message.

In the present embodiment, the network side device may be a base station, that is, when the base station interacts with the UE, which may be a bearer management process or a mobility management process and so on, the UE is indicated to detect AP information including a measuring result of the signal quality of the AP and whether information is acquired from the ANDSF as a detection indication, to further point out that a detection result is described by an access characteristic value of the AP.

The configuration performed to the UE through the MAC CE may be performed according to a Logical Channel Identity (LCID) corresponding to the MAC CE, such as an LCID of a downlink shared channel as shown in Table 1.

**Table 1**

| Serial Number | LCID value |
|---|---|
| 00000 | Common control channel |
| 00001-01010 | LCID |
| 01011-11010 | Reserved serial numbers |
| 11011 | Activate/deactivate |
| 11100 | UE contention resolution identifier |
| 11101 | Timing advance command |
| 11110 | Discontinuous reception (DRX) command |
| 11111 | Filler |

One serial number among reserved serial numbers is delimitated, e.g. a serial number 01100 is selected and defined as information of the detection indication.

In the present embodiment, the base station indicates the UE to only report an AP satisfying an access condition.

Step 602: The UE detects the quality of service of the AP according to the detection indication sent from the network side device.

The network device may further configure a timer for the UE, or control, according to location information of a current UE, AP information detection performed by the UE, so as to reduce power consumption of the UE caused by unnecessary detection. In the present embodiment, the timer configured by the base station for the UE is 60ms, that is, a duration for the UE to detect each AP is limited within 60ms.

In the present embodiment, three APs need to be detected, and the UE completes the detection on the three APs within 60ms and generates detection results according to network requirements, wherein an access characteristic value corresponding to AP1 is "accessible", an access characteristic value corresponding to AP2 is "inaccessible", and an access characteristic value corresponding to AP3 is "inaccessible". The UE only reports a measuring result of AP1 at the moment.

Step 603: The UE reports a detection result of the quality of service of the AP and the configuration information acquired from the ANDSF to the network side device by using an MAC CE.

The UE reports the detection result to a 3GPP access network by using an MAC CE signaling. In the present embodiment, the UE sends the detection result to the access network by using an uplink MAC CE signaling during a process of interacting with the access network.

The MAC CE signaling used for performing the transmission to the network side device, such as the base station, may be included in a reserved serial number in an uplink shared channel LCID list as shown in Table 2. For example, a serial number 01100 among serial numbers is delimitated to define the detection result of the quality of service of the AP, and 01101 is used for defining whether information is acquired from the ANDSF.

**Table 2**

| Serial Number | LCID value |
|---|---|
| 00000 | Common control channel |
| 00001-01010 | LCID |
| 01011-10111 | Reserved serial numbers |
| 11001 | Extended power margin report |
| 11010 | Power margin report |
| 11011 | Cell wireless network temporary ID |
| 11100 | Truncated cache status report |
| 11101 | Short cache status report |
| 11110 | Long cache status report |
| 11111 | Filling information |

Step 604: The network side device controls allocation of network resources by using the detection result of the quality of service of the AP reported by the UE.

The 3GPP access network controls subsequent shunting of the UE or AP access according to the detection information of the AP reported by the UE. In the present embodiment, the moving speed of the UE is fast and has exceeded a threshold set by the network. At the moment, the network side needs to make the UE leave a WLAN AP where the UE has resided, or prohibit the UE from accessing a WLAN AP.

Embodiment 4: A UE sends a detection result of service of quality not including load information to an access network by using an MAC CE signaling, including the following specific steps, as shown in Fig. 7, when a network side device is a base station.

Step 701: The base station uses an acquired detection result of the signal quality of an AP and information of a current load of the AP as a detection indication, and delivers the detection indication to the UE by using a system message.

In the present embodiment, the access network configures the detection indication to the UE by using the system message, and indicates the UE to execute detection of AP information including the measuring result of the signal quality of the AP to further point out that a signal detection result of the AP is described by a measured value of the AP.

In the present embodiment, the access network indicates to report an AP with a signal measured value higher than 60mw.

Step 702: The UE detects the quality of service of the AP according to the detection indication sent from the base station.

After receiving an AP linked list and configuration information of the access network, the UE detects the AP information as required by configuration of the access network.

In the present embodiment, three APs need to be detected, and the UE completes the detection on the three APs within 60ms and generates detection results according to network requirements, wherein a measured value corresponding to AP1 is 45mw, a measured value corresponding to AP2 is 70mw, a measured value corresponding to AP3 is 50mw and only the measured value corresponding to AP2 is higher than 60mw.

Step 703: The UE sends a detection result of the quality of service of each AP to the base station by using an MAC CE signaling.

The UE sends the result of the detected AP2 to a 3GPP access network by using an MAC CE signaling. In the present embodiment, the UE sends the detection result to the access network by using an uplink MAC CE signaling during a process of interacting with the access network.

A method of an LCID corresponding to an MAC CE of detection information of the AP is shown by an uplink shared channel LCID table as shown in Table 1.

Step 704: The base station controls allocation of network resources by using the detection result of the quality of service of the AP reported by the UE.

The 3GPP access network controls subsequent shunting of the UE or AP access according to the detection result of the quality of service of the AP reported by the UE.

The foregoing descriptions are only preferred embodiments of the disclosure, but are not used for limiting the protection scope of the disclosure.

## Claims

1. A method for acquiring quality of service of a wireless Access Point (AP), comprising:
detecting, by a User Equipment (UE), quality of service of an AP according to a detection indication sent from a network side device;
reporting, by the UE, a detection result of the quality of service of the AP to the network side device.

2. The method according to claim 1, wherein the quality of service of the AP comprises: signal quality of the AP, and/or a current load of the AP,
wherein the signal quality of the AP comprises a measured value of the signal quality of the AP, or an access characteristic value of the AP.

3. The method according to claim 2, wherein the detection indication comprises one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

4. The method according to claim 3, wherein a content of the detection result of the quality of service reported by the UE comprises one of the followings or a combination thereof:
related information of an AP with a detection result satisfying a preset condition is reported;
related information of an AP detected unsuccessfully is reported; and
related information of an AP with a detection result not satisfying the preset condition is reported.

5. The method according to claim 4, wherein the preset condition comprises one of the followings or a combination thereof:
signal quality of a detected AP is higher than a preset threshold;
signal quality of a detected AP is lower than the preset threshold;
a load of a detected AP is higher than a preset threshold; and
a load of a detected AP is lower than the preset threshold.

6. The method according to any one of claims 1 to 5, wherein the reporting the detection result of the quality of service of the AP to the network side device comprises:
reporting, by the UE, the detection result of the quality of service of the AP to the network side device by using a Radio Resource Control (RRC) signaling;
or reporting, by the UE, the detection result of the quality of service of the AP to the network side device by using a Medium/Media Access Control Element (MAC CE).

7. A method for acquiring quality of service of an Access Point (AP), comprising:
delivering, by a network side device, a detection indication to a User Equipment (UE);
adjusting and regulating, by the network side device, resource allocation according to a detection result of quality of service of an AP reported by the UE.

8. The method according to claim 7, wherein the detection indication comprises one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

9. The method according to claim 8, wherein the detection result of the quality of service of the AP comprises: a measuring result of signal quality, and/or information of a current load of the AP;
wherein the measuring result of the signal quality of the AP comprises a measured value of the signal quality of the AP, or an access characteristic value of the AP.

10. The method according to claim 8, wherein a content of the detection result of the quality of service comprises one of the followings or a combination thereof:
related information of an AP with a detection result satisfying a preset condition is reported;
related information of an AP detected unsuccessfully is reported; and
related information of an AP with a detection result not satisfying the preset condition is reported.

11. The method according to claim 10, wherein the preset condition comprises one of the followings:
signal quality of a detected AP is higher than a preset threshold;
signal quality of a detected AP is lower than the preset threshold;
a load of a detected AP is higher than a preset threshold; and
a load of a detected AP is lower than the preset threshold.

12. The method according to any one of claims 7 to 11, wherein the delivering the detection indication to the UE comprises:
sending, by the network side device, the detection indication to the UE by using a Radio Resource Control (RRC) signaling;
or sending, by the network side device, the detection indication to the UE by using a Medium/Media Access Control Element (MAC CE);
or sending, by the network side device, the detection indication to the UE by using a system message.

13. A method for acquiring quality of service of an Access Point (AP), comprising:
delivering, by a network side device, a detection indication to a User Equipment (UE);
detecting, by the UE, quality of service of an AP according to the detection indication sent from the network side device;
reporting, by the UE, a detection result of the quality of service of the AP to the network side device;
adjusting and controlling, by the network side device, resource allocation according to the detection result of the quality of service of the AP reported by the UE.

14. A User Equipment (UE), comprising: a detection module and a transceiver module, wherein
the detection module is configured to detect quality of service of an Access Point (AP) according to a detection indication sent from a network side device, and send a detection result of the quality of service of the AP to the transceiver module;
the transceiver module is configured to report the detection result of the quality of service of the AP sent from the detection module to the network side device.

15. The UE according to claim 14, wherein
the detection module is configured to detect signal quality of the AP, and/or a current load of the AP as the quality of service of the AP;
wherein the signal quality of the AP comprises a measured value of the signal quality of the AP, or an access characteristic value of the AP.

16. The UE according to claim 15, wherein the detection indication comprises one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

17. The UE according to claim 16, wherein
the detection module is configured to report a content of the detection result of the quality of service, comprising one of the followings or a combination thereof:
report related information of an AP with a detection result satisfying a preset condition;
report related information of an AP detected unsuccessfully; and
report related information of an AP with a detection result not satisfying the preset condition.

18. The UE according to claim 17, wherein the detection module is configured to use one of the followings or a combination thereof as the preset condition:
signal quality of a detected AP is higher than a preset threshold;
signal quality of a detected AP is lower than the preset threshold;
a load of a detected AP is higher than a preset threshold; and
a load of a detected AP is lower than the preset threshold.

19. The UE according to any one of claims 14 to 18, wherein
the transceiver module is configured to report a detection result of the quality of service of each AP to the network side device by using a Radio Resource Control (RRC) signaling;
or report a detection result of the quality of service of each AP to the network side device by using a Medium/Media Access Control Element (MAC CE).

20. A network side device, comprising: a transceiver module and a control module, wherein
the transceiver module is configured to deliver a detection indication to a User Equipment (UE), and send a detection result of quality of service of an Access Point (AP) reported by the UE to the control module;
the control module is configured to adjust and control resource allocation according to the detection result of the quality of service of the AP which is sent from the transceiver module and reported by the UE.

21. The network side device according to claim 20, wherein the detection indication comprises one of the followings or a combination thereof:
whether the UE is required to report the detection result of the quality of service of the AP;
a specific content detected by the UE is indicated;
a detection frequency or a detection period of the UE and/or a reporting frequency or a reporting period of the detection result of the quality of service are/is indicated;
the UE is indicated to report some or all contents in the detection result of the quality of service;
the UE is indicated to report configuration information acquired from an Access Network Discovery and Selection Function (ANDSF).

22. The network side device according to claim 21, wherein
the transceiver module is configured to receive a measuring result of signal quality of the AP reported by the UE, and/or information of a current load of the AP as the detection result of the quality of service,
wherein the measuring result of the signal quality of the AP comprises a measured value of the signal quality, or an access characteristic value of the AP.

23. The network side device according to claim 22, wherein a content of the detection result of the quality of service comprises one of the followings or a combination thereof:
related information of an AP with a detection result satisfying a preset condition is reported;
related information of an AP detected unsuccessfully is reported; and
related information of an AP with a detection result not satisfying the preset condition is reported.

24. The network side device according to claim 23, wherein the preset condition comprises one of the followings or a combination thereof:
signal quality of a detected AP is higher than a preset threshold;
signal quality of a detected AP is lower than the preset threshold;
a load of a detected AP is higher than a preset threshold; and
a load of a detected AP is lower than the preset threshold.

25. The network side device according to any one of claims 20 to 24, wherein
the transceiver module is configured to send the detection indication to the UE by using a Radio Resource Control (RRC) signaling;
or send the detection indication to the UE by using a Medium/Media Access Control Element (MAC CE);
or send the detection indication to the UE by using a system message.

26. A system for acquiring quality of service of an Access Point (AP), comprising:
a network side device and a User Equipment (UE), wherein
the network side device is configured to deliver a detection indication to the UE and adjust and control resource allocation according to a detection result of quality of service of an AP reported by the UE;
the UE is configured to detect the quality of service of the AP according to the detection indication sent from the network side device, and report the detection result of the quality of service of the AP to the network side device.
